# EUROPÄISCHE PATENTSCHRIFT

(11) **EP 0 818 977 B1**
(45) Veröffentlichungstag und Bekanntmachung des Hinweises auf die Patenterteilung: **27.10.1999**
(21) Anmeldenummer: 96907447.5
(22) Anmeldetag: 13.03.1996
(51) Int. Cl.: A61C 17/34, A61C 17/26

(54) **BÜRSTENTEIL FÜR EINE ELEKTRISCHE ZAHNBÜRSTE**
BRUSH HEAD FOR AN ELECTRIC TOOTHBRUSH
BROSSE POUR BROSSE A DENTS ELECTRIQUE

(30) Priorität: 01.04.1995 DE 19512318
(43) Veröffentlichungstag der Anmeldung: 21.01.1998
(73) Patentinhaber: Braun Aktiengesellschaft, Frankfurt am Main (DE)
(72) Erfinder: HERZOG, Karl, D-60489 Frankfurt am Main (DE)
(74) Vertreter: Vorbeck, Wolfgang Ernst August, Dr.
(86) Internationale Anmeldenummer: EP9601061
(87) Internationale Veröffentlichungsnummer: WO9631171

(56) Entgegenhaltungen:
- DE-A- 4 239 251
- DE-A- 4 343 103

## Beschreibung

Die Erfindung betrifft elektrische Zahnbürsten und insbesondere ein Bürstenteil für eine elektrische Zahnbürste nach den Merkmalen des Oberbegriffs des Patentanspruchs 1.

Ein derartiges Bürstenteil ist aus der deutschen Offenlegungsschrift DE 39 37 850 A1 bekannt. Dort ist eine elektrische Zahnbürste beschrieben, die ein Griffteil aufweist, aus dem eine Antriebswelle herausragt. In dem Griffteil sind elektrische Antriebsmittel untergebracht, mit deren Hilfe die Antriebswelle in eine oszillierende Drehbewegung um ihre Längsachse versetzt werden kann. Auf das Griffteil und die Antriebswelle kann ein in Richtung der Längsachse sich erstreckendes Bürstenteil aufgesteckt werden, das ein Trägerrohr aufweist, an dessen Ende ein Borstenträger angeordnet ist. In dem Trägerrohr ist eine Welle untergebracht, die im aufgesteckten Zustand mit der Antriebswelle gekoppelt ist. Von dem Borstenträger stehen eine Vielzahl von Borsten ab, die etwa quer zur Längsachse des Bürstenteils angeordnet sind. Mit Hilfe eines Kegelradgetriebes wird die von der Antriebswelle auf die Welle des Bürstenteils übertragene oszillierende Drehbewegung um etwa 90 Grad umgelenkt. Dies hat zur Folge, daß der Borstenträger im eingeschalteten Zustand der elektrischen Zahnbürste eine oszillierende Drehbewegung um eine etwa quer zur Längsachse des Bürstenteils und damit etwa parallel zu den Borsten angeordnete Achse ausführt. Die von den freien Enden der Borsten gebildete Reinigungsfläche führt somit eine oszillierende Drehbewegung auf den Zahnflächen eines Benutzers aus. Mit dieser oszillierenden Drehbewegung kann eine gute Reinigung der Zahnflächen erreicht werden.

Aufgabe der Erfindung ist es, ein Bürstenteil für eine elektrische Zahnbürste zu schaffen, das einen einfachen Antrieb aufweist und mit dem eine verbesserte Zahnreinigung erreichbar ist.

Entsprechend der Erfindung wird diese Aufgabe bei einem Bürstenteil der eingangs genannten Art durch die Merkmale des Anspruchs 1 gelöst. Diese Lösung zeichnet sich durch einen konstruktiv unaufwendigen Aufbau des Antriebs sowie durch die geringe Anzahl der verwendeten Bauteile aus und bietet die Voraussetzung, das Bürstenteil in eine solche Drehbewegung zu versetzen, die eine verbesserte Zahnreinigung ermöglicht.

Nach einer vorteilhaften Weiterbildung der Erfindung bildet das eine Ende der Welle die Längsachse und das andere Ende der Welle ist in einem Winkel zur Längsachse angeordnet. Dies stellt insbesondere im Hinblick auf die Herstellung des Bürstenteils eine besonders einfache und kostengünstige Möglichkeit dar.

Besonders zweckmäß ist es, wenn der von der Kurbelwelle gebildete Winkel einen Wert in einem Bereich von nahezu 0 Grad bis etwa 30 Grad aufweist. Dieser Bereich hat sich in der Praxis als besonders vorteilhaft herausgestellt, wobei ein Winkel von etwa 10 Grad bevorzugt ist.

Bei einer weiteren vorteilhaften Weiterbildung der Erfindung ist der Borstenträger auf dem abgewinkelten Ende der Kurbelwelle gelagert. Dabei genügt zur Lagerung im wesentlichen eine Bohrung in dem Borstenträger. Dies ist insbesondere im Hinblick auf die Herstellung besonders einfach und damit kostengünstig.

Bei einer besonders vorteilhaften Ausgestaltung der Erfindung verlaufen die Längsachse, die Querachse, das abgewinkelte Ende der Kurbelwelle und die Achse durch einen gemeinsamen Schnittpunkt. Dadurch ergibt sich eine besonders ausgewogene kurvenförmige räumliche Bewegung der freien Enden der Borsten des Borstenträgers.

Bei einer anderen Ausgestaltung der Erfindung verlaufen die Längsachse, die Achse und das abgewinkelte Ende der Kurbelwelle durch einen gemeinsamen Schnittpunkt, durch den jedoch die Querachse nicht verläuft. Auf diese Weise können andere kurvenförmige räumliche Bewegungen der freien Enden der Borsten des Borstenträgers erreicht werden. Dabei ist es besonders vorteilhaft, daß durch die Wahl verschiedener Schnittpunkte jeweils verschiedene kurvenförmige Bewegungen erzeugt werden und die jeweils für sich bestimmte Vorteile aufweisen können.

Bei einer weiteren vorteilhaften Ausgestaltung der Erfindung ist der Borstenträger gegen axiale Verschiebung gesichert.

Bei einer vorteilhaften Weiterbildung der Erfindung steht ein Stift, ein Zapfen oder dergleichen von dem Borstenträger ab, der mit einer Führung, insbesondere mit einem Schlitz oder dgl. gekoppelt ist. Das Zusammenwirken des Stifts oder Zapfens und des Schlitzes verhindert unkontrollierte Bewegungen des Borstenträgers bei einer Drehbewegung der Kurbelwelle.

Die zusätzliche Schwenkbewegung des Borstenträgers hat zur Folge, daß die von den freien Enden der Borsten gebildete Reinigungsfläche zusätzlich zu der oszillierenden Drehbewegung eine oszillierende Schwenkbewegung ausführt. Die Drehbewegung bewirkt, wie bisher, eine gute Reinigung der Zahnflächen eines Benutzers. Mit Hilfe der Schwenkbewegung der Reinigungsfläche ist aufgrund der zusätzlichen Bewegungskomponente eine bessere Reinigung der Zähne möglich.

Die Ausrichtung der für die zusätzliche Schwenkbewegung vorgesehenen Achse hat zur Folge, daß der Borstenträger eine zusätzliche Hin- und Herbewegung in Richtung der Längsachse der Borsten ausführt. Diese Bewegung hat eine verbesserte Reinigung der Zahnflächen zur Folge. Diese verbesserte Reinigung der Zähne wird ohne zusätzliche Maßnahmen des Benutzers, also selbsttätig, erreicht.

Eine besonders einfache konstruktive Lösung ergibt sich dadurch, daß die Welle ein abgewinkeltes Ende aufweist, auf welches der Borstenträger aufgesteckt ist. Die Drehbewegung der Kurbelwelle kann dabei vorzugsweise kontinuierlich oder auch oszillierend sein.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind.

Es zeigen:
- Fig. 1: eine schematische Darstellung eines Längsschnitts durch ein erstes Ausführungsbeispiel eines Bürstenteils für eine elektrische Zahnbürste,
- Fig. 2: eine schematische Darstellung einer Draufsicht auf das Bürstenteil der Fig. 1 aus der Richtung A der Fig. 1,
- Fig. 3: eine schematische Darstellung eines Längsschnitts durch ein zweites Ausführungsbeispiel eines Bürstenteils für eine elektrische Zahnbürste,
- Fig. 4: eine schematische Darstellung eines Querschnitts durch den Borstenträger des Bürstenteils der Fig. 3 entlang der Ebene B - B der Fig. 3,
- Fig. 5: eine schematische Darstellung eines Längsschnitts durch ein drittes Ausführungsbeispiel eines Bürstenteils für eine elektrische Zahnbürste,

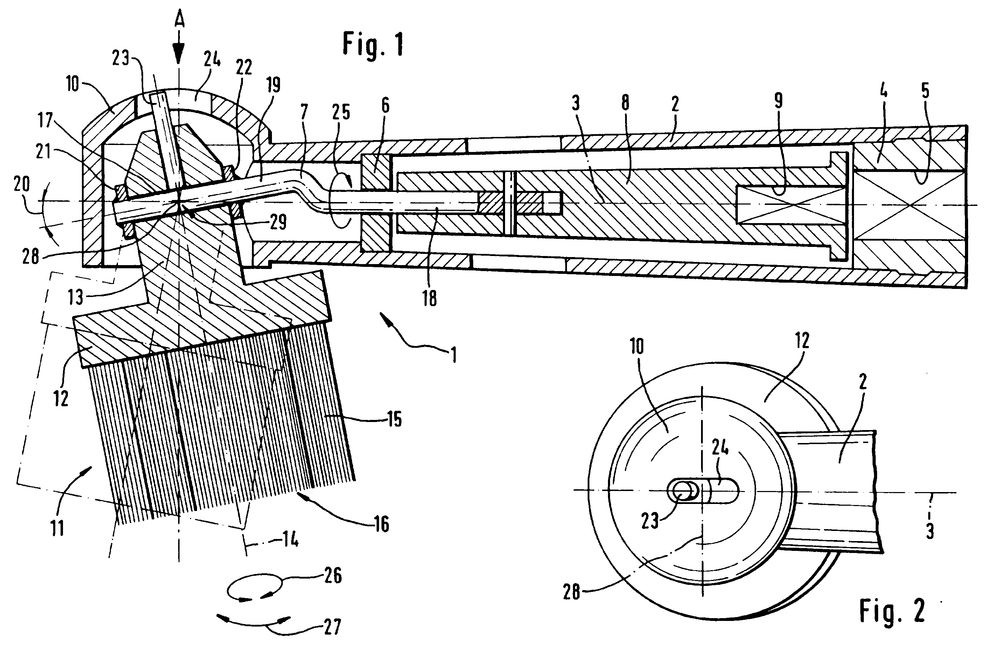

Die anhand der Fign. 1 bis 5 nachfolgend beschriebenen Bürstenteile sind geeignet zum Betrieb mit einer elektrischen Zahnbürste, wie sie in der deutschen Offenlegungsschrift DE 39 37 850 A1 beschrieben ist. Diese elektrische Zahnbürste weist ein Griffteil auf, aus dem eine Antriebswelle herausragt. Die Antriebswelle und dasjenige Ende des Griffteils, aus dem die Antriebswelle herausragt, sind mit Außenkonturen zum Aufstecken eines Bürstenteils und zum Übertragen der erzeugten Drehbewegung versehen.

In dem Griffteil sind elektrische Antriebsmittel untergebracht, die die Antriebswelle im eingeschalteten Zustand in eine Drehbewegung um ihre Längsachse versetzen. Bei den in der deutschen Offenlegungsschrift DE 39 37 850 A1 beschriebenen Bürstenteilen handelt es sich um eine oszillierende Drehbewegung um die Längsachse der Antriebswelle, wobei der überstrichene Drehwinkelbereich etwa +/- 35 Grad beträgt.

In gleicher Weise sind die anhand der Fign. 1 bis 5 nachfolgend beschriebenen Bürstenteile geeignet zum Betrieb mit einer elektrischen Zahnbürste, wie sie in der deutschen Offenlegungsschrift DE 39 37 850 A1 beschrieben ist, bei der jedoch anstelle der oszillierenden Drehbewegung der Antriebswelle auch eine kontinuierliche Drehbewegung der Antriebswelle um ihre Längsachse vorgesehen sein kann.

In den Fign. 1 und 2 ist als erstes Ausführungsbeispiel ein Bürstenteil 1 dargestellt, das auf das Griffteil und die Antriebswelle der eingangs erläuterten elektrischen Zahnbürste aufgesteckt werden kann. Das Bürstenteil 1 weist ein Trägerrohr 2 auf, das sich in Richtung einer Längsachse 3 erstreckt. Das Trägerrohr 2 ist an seinem dem Griffteil zugewandten freien Ende mit einem Profilring 4 versehen, der eine Innenkontur 5 besitzt, die zu der Außenkontur des Griffteils komplementär ist. Auf diese Weise kann das Bürstenteil 1 drehfest auf das Griffteil aufgesteckt werden.

An seinem dem Griffteil abgewandten Ende ist das Trägerrohr 2 mit einem Lager 6 versehen, in dem eine Welle 7 drehbar gelagert ist, die vorzugsweise aus Metall besteht. Die Welle 7 erstreckt sich ausgehend vom Lager 6 in der dem Griffteil zugewandten Richtung etwa bis zur Mitte des Trägerrohrs 2 und steht in der dem Griffteil abgewandten Richtung ein Stück über das Lager 6 und damit über das Trägerrohr 2 über. In der dem Griffteil zugewandten Richtung ist die Welle 7 beispielsweise mittels eines Querstifts mit einer weiteren Welle 8 fest verbunden, die in der Längsachse 3 angeordnet ist und vorzugsweise aus Kunststoff besteht. Die weitere Welle 8 besitzt an ihrem dem Griffteil zugewandten freien Ende eine Innenkontur 9, die zu der Außenkontur der aus dem Griffteil herausragenden Antriebswelle komplementär ist. Auf diese Weise kann die Antriebswelle drehfest mit der weiteren Welle 8 und damit auch mit der Welle 7 verbunden werden.

Bei den Innen- und Außenkonturen 5, 9 kann es sich - im Querschnitt gesehen - um quadratische, sternförmige oder ähnliche Konturen handeln, die derart aneinander angepaßt sind, daß einerseits ein einfaches Aufstecken und Abziehen des Bürstenteils 1 vom Griffteil durch einen Benutzer möglich, aber andererseits auch der sichere Sitz des Bürstenteils 1 auf dem Griffteil gewährleistet ist.

An seinem dem Griffteil abgewandten Ende ist an das Trägerrohr 2 eine Schale 10 angebracht, die etwa denjenigen Bereich abdeckt, den die Welle 7 über das Lager 6 und damit über das Trägerrohr 2 übersteht. In diesem Bereich sind des weiteren ein Borstenträger 11 sowie Mittel zur Kopplung des Borstenträgers 11 mit der Welle 7 und dem Trägerrohr 2 angeordnet.

Der Borstenträger 11 weist eine scheibenförmige Platte 12 sowie eine Nabe 13 auf und ist im wesentlichen rotationssymmetrisch zu einer Querachse 14 ausgestaltet. Auf ihrer der Welle 7 abgewandten Seite ist die Platte 12 mit einer Vielzahl von Borsten 15 versehen, die in einer zur Querachse 14 etwa parallelen Richtung von der Platte 12 abstehen. Die Borsten 15 sind alle etwa gleich lang, so daß deren freie Enden eine etwa kreisförmige Reinigungsfläche 16 bilden. Es können jedoch auch anders aussehende Reinigungsflächen vorgesehen sein, die aufgrund unterschiedlicher Längen der Borsten z.B. profiliert und/oder geneigt sind.

Auf der der Welle 7 zugewandten Seite der Platte 12 ist die Nabe 13 angeordnet, die eine durchgehende Bohrung 17 aufweist, die rechtwinklig zur Querachse 14 ausgerichtet ist.

Die Welle 7 ist als Kurbelwelle ausgestaltet. Das dem Griffteil zugewandte Ende 18 der Welle 7 ist in der Längsachse 3 angeordnet. Das von dem Griffteil abgewandte Ende 19 der Welle 7 ist dazu abgewinkelt angeordnet. Zwischen dem Ende 19 der Welle 7 und der Längsachse 3 ist ein Winkel 20 angeordnet.

Das abgewinkelte Ende 19 der Welle 7 ist durch die Bohrung 17 des Borstenträgers 11 hindurchgesteckt. Damit der Borstenträger 11 nicht auf dem abgewinkelten Ende 19 der Welle 7 hin- und herrutscht, ist auf beiden Seiten des Borstenträgers 11 jeweils eine Scheibe 21, 22 vorgesehen, die fest mit dem abgewinkelten Ende 19 der Welle 7 verbunden, beispielsweise verschweißt ist. Der Borstenträger 11 ist damit schwenkbar auf dem abgewinkelten Ende 19 der Welle 7 gelagert.

Mit der Nabe 13 des Borstenträgers 11 ist ein Stift 23 fest verbunden, beispielsweise eingepreßt. Es ist auch möglich, daß der Stift einstückig an die Nabe 13 angeformt ist. Der Stift 23 ist in der Querachse 14 angeordnet und steht somit senkrecht auf der von dem abgewinkelten Ende 19 der Welle 7 festgelegten Richtung. In der an dem Trägerrohr 2 angebrachten Schale 10 ist ein Schlitz 24 enthalten, dessen Mittelebene parallel zur oder in der Längsachse 3 angeordnet ist. Die Breite des Schlitzes 24 ist geringfügig größer als der Durchmesser des Stifts 23, die Länge des Schlitzes 24 hängt unter anderem von dem Wert des Winkels 20 ab. Die Länge des Stifts 23 ist derart gewählt, daß er zumindest in den Schlitz 24 hineinragt und somit von dem Schlitz 24 geführt wird.

Im eingeschalteten Zustand der elektrischen Zahnbürste wird die Welle 7 des auf das Griffteil aufgesteckten Bürstenteils 1 von der aus dem Griffteil herausragenden Antriebswelle entweder in eine oszillierende oder in eine kontinuierliche Drehbewegung um die Längsachse 3 versetzt, wie dies eingangs beschrieben worden ist. Im vorliegenden Ausführungsbeispiel wird die Welle 7 in eine Rotationsbewegung 25 um die Längsachse 3 versetzt.

Beide mögliche Drehbewegungen, also die kontinuierliche wie auch die oszillierende Drehbewegung haben zur Folge, daß die freien Enden der Borsten 15 kurvenförmige Bewegungen ausführen. Durch die Führung des Stifts 23 in dem Schlitz 24 setzen sich diese räumlichen Bewegungen aus einer oszillierenden Drehbewegung 26 des Borstenträgers 11 um die Querachse 14 einerseits, sowie aus einer oszillierenden Drehbewegung 27 des Borstenträgers 11 um eine Achse 28 andererseits zusammen. Der Winkelbereich der oszillierenden Drehbewegungen 26, 27 beträgt jeweils das Doppelte des Winkels 20.

Die Achse 28 ist in einem Winkel von etwa 90 Grad zur Querachse 14 und etwa 90 Grad zur Längsachse 3 angeordnet. Im ersten Ausführungsbeispiel schneiden sich die Längsachse 3 und das abgewinkelte Ende 19 der Welle 7 in einem gemeinsamen Schnittpunkt 29, durch den auch die Achse 28 und die Querachse 14 laufen. Der von den vorstehend genannten Achsen gebildete Schnittpunkt 29 wird des weiteren noch von der Achse des Stiftes 23 geschnitten.

Die Reinigungsfläche 16 des Borstenträgers 11 führt dadurch eine oszillierende Drehbewegung 26 um die Querachse 14 mit einer gleichzeitigen Hin- und Herbewegung der gesamten Reinigungsfläche 16 um die Achse 28 aus.

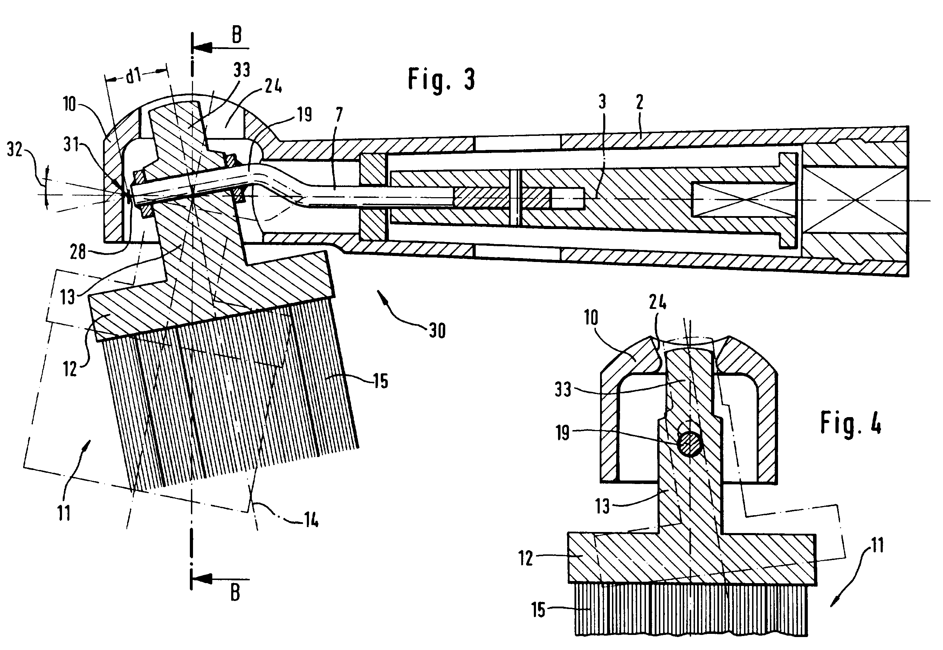

In den Fign. 3 und 4 ist als zweites Ausführungsbeispiel ein Bürstenteil 30 dargestellt, das auf das Griffteil und die Antriebswelle der eingangs erläuterten elektrischen Zahnbürste aufgesteckt werden kann. Im Unterschied zum Bürstenteil 1 des ersten Ausführungsbeispiels, bei dem sich die Längsachse 3, das abgewinkelte Ende 19 der Welle 7, die Querachse 14 und die Achse 28 in dem gemeinsamen Schnittpunkt 29 schneiden, weist das Bürstenteil 30 des zweiten Ausführungsbeispiels einen Schnittpunkt 31 der Längsachse 3, des abgewinkelten Endes 19 der Welle 7 und der Achse 28 auf, der nicht mit der Querachse 14 zusammenfällt. Dieser Schnittpunkt 31 ist auf der dem Trägerrohr 2 abgewandten Seite der Nabe 13 des Borstenträgers 11 angeordnet. Zwischen der Achse 28 und der Achse 14 besteht ein Abstand d1.

Im eingeschalteten Zustand der elektrischen Zahnbürste ergeben sich bei dem zweiten Ausführungsbeispiel kurvenförmige, räumliche Bewegungen der freien Enden der Borsten 15, die sich von den räumlichen Bewegungen im ersten Ausführungsbeispiel unterscheiden.

Des weiteren ist bei dem zweiten Ausführungsbeispiel der Fign. 3 und 4 der bei dem ersten Ausführungsbeispiel in die Nabe 13 eingepreßte Stift 23 ersetzt durch einen an die Nabe 13 einstückig angeformten Zapfen 33, der in entsprechender Weise wie der Stift 23 in den Schlitz 24 hineinragt und somit von diesem geführt wird. Dabei kann die spezielle Form und Kontur des Schlitzes 24 je nach Bedarf unterschiedlich sein.

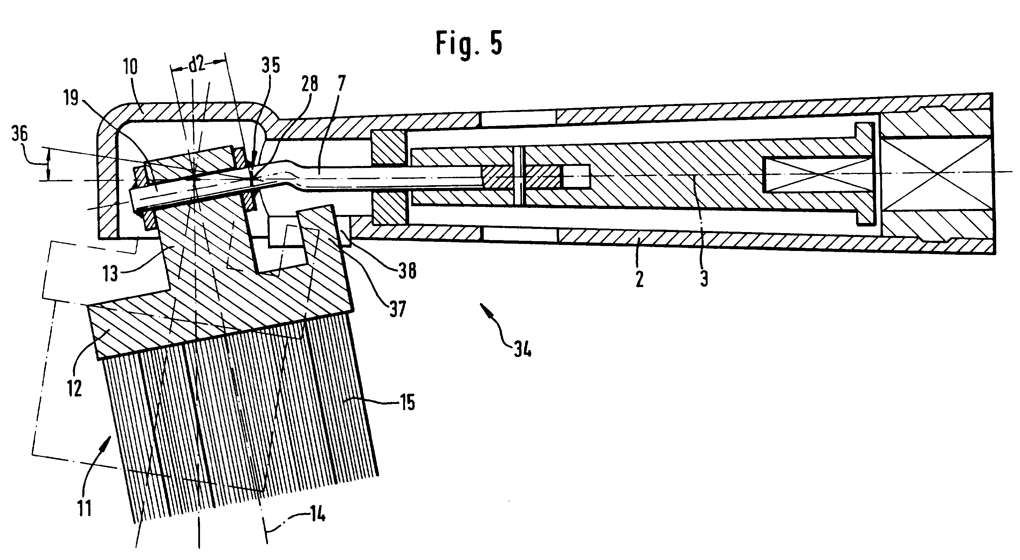

In der Fig. 5 ist als drittes Ausführungsbeispiel ein Bürstenteil 34 dargestellt, das auf das Griffteil und die Antriebswelle der eingangs erläuterten elektrischen Zahnbürste aufgesteckt werden kann. Im Unterschied zum Bürstenteil 1 des ersten Ausführungsbeispiels, bei dem sich die Längsachse 3, das abgewinkelte Ende der Welle 7, die Querachse 14 und die Achse 28 in dem gemeinsamen Schnittpunkt 29 schneiden, weist das Bürstenteil 34 des dritten Ausführungsbeispiels einen Schnittpunkt 35 der Längsachse 3, des abgewinkelten Endes 19 der Welle 7 und der Achse 28 auf, der nicht mit der Querachse 14 zusammenfällt. Der Schnittpunkt 35 ist auf der dem Trägerrohr 2 zugewandten Seite der Nabe 13 des Borstenträgers 11 angeordnet. Zwischen der Achse 28 und der Achse 14 besteht ein Abstand d2.

Im eingeschalteten Zustand der elektrischen Zahnbürste ergeben sich bei dem dritten Ausführungsbeispiel kurvenförmige, räumliche Bewegungen der freien Enden der Borsten 15, die sich von den räumlichen Bewegungen des ersten bzw. zweiten Ausführungsbeispiels unterscheiden.

Des weiteren ist bei dem dritten Ausführungsbeispiel der Fig. 5 der Stift 23 und der Schlitz 24 des ersten Ausführungsbeispiels nicht vorhanden. Statt dessen steht bei dem dritten Ausführungsbeispiel von der dem Trägerrohr 2 zugewandten Seite der Platte 12 ein Zapfen 37 etwa parallel zur Querachse 14 in Richtung zum Trägerrohr 2 ab, der in einen zugeordneten Schlitz 38 des Trägerrohrs 2 hineinragt. Bei dem dritten Ausführungsbeispiel wird somit der Zapfen 37 und dadurch der Borstenträger 11 von dem Schlitz 38 in entsprechender Weise geführt wie der Stift 23 von dem Schlitz 24 beim ersten Ausführungsbeispiel.

Vorzugsweise liegt der Winkel 36 zwischen der Längsachse 3 und dem abgewinkelten Ende 19 der Welle 7 in einem Bereich von nahezu 0 Grad und etwa 30 Grad.

Es ist bei allen Ausführungsbeispielen möglich, die Führung des Borstenträgers 11 hinsichtlich des Trägerrohrs 2 anstelle durch einen in einen Schlitz eingreifenden Zapfen oder dergl. auch durch Gelenkstangen, flexible Zugelemente, Metallfedern, Elastomerglieder usw. zu realisieren.

## Patentansprüche

1. Bürstenteil (1, 30, 34, 39) für eine elektrische Zahnbürste, mit einem Trägerrohr (2), in dem eine um eine Längsachse (3) drehbar gelagerte und antreibbare Welle (7) untergebracht ist, und mit einem Borstenträger (11), der mit der Welle (7) gekoppelt ist, so daß eine Drehbewegung (25) der Welle (7) um die Längsachse (3) eine oszillierende Drehbewegung (26) des Borstenträgers (11) um eine Querachse (14) bewirkt, **dadurch gekennzeichnet**, daß der Borstenträger (11) unmittelbar auf der Welle (7) gelagert und am Trägerrohr (2) geführt ist, und die Welle (7) als Kurbelwelle ausgebildet ist.

2. Bürstenteil nach Anspruch 1, **dadurch gekennzeichnet**, daß das eine Ende (18) der Welle (7) die Längsachse (3) bildet und das andere Ende (19) der Welle (7) in einem Winkel (20, 32, 36) zur Längsachse (3) angeordnet ist.

3. Bürstenteil nach Anspruch 2, **dadurch gekennzeichnet**, daß der Winkel (20, 32, 36) einen Wert in einem Bereich von nahezu 0 Grad bis etwa 30, Grad bevorzugt etwa 10 Grad, aufweist.

4. Bürstenteil nach Anspruch 2 oder 3, **dadurch gekennzeichnet**, daß der Borstenträger (11) schwenkbar auf dem anderen, abgewinkelten Ende (19) der Welle (7) gelagert ist.

5. Bürstenteil nach einem der vorhergehenden Ansprüche, **dadurch gekennzeichnet**, daß die Längsachse (3), die Querachse (14), das abgewinkelte Ende (19) der Welle (7) und eine Achse (28) quer zu der durch Längsachse (3) und die Querachse (14) bestimmten Ebene durch einen gemeinsamen Schnittpunkt (29) verlaufen.

6. Bürstenteil nach einem der Ansprüche 1 bis 4, **dadurch gekennzeichnet**, daß die Längsachse (3), das abgewinkelte Ende (19) der Welle (7) und die Achse (28) durch einen gemeinsamen Schnittpunkt (31, 35) verlaufen, durch den die Querachse (14) nicht verläuft.

7. Bürstenteil nach einem der vorhergehenden Ansprüche, **dadurch gekennzeichnet**, daß der Borstenträger (11) gegen axiale Verschiebung gesichert ist.

8. Bürstenteil nach einem der vorhergehenden Ansprüche, **dadurch gekennzeichnet**, daß vom Borstenträger (11) ein Stift (23) oder Zapfen (33, 37) in Richtung der Querachse (14) absteht, der mit einer mit dem Trägerrohr (2) verbundenen Führung (24, 38) gekoppelt ist.

9. Bürstenteil nach Anspruch 8, **dadurch gekennzeichnet**, daß als Führung ein Schlitz (24, 38) oder eine Öffnung (41) vorgesehen ist, die in einer an das Trägerrohr (2) angebrachten Schale (10) oder im Trägerrohr (2) selbst vorgesehen und etwa parallel zur Längsachse (3) angeordnet ist, und in die der Stift (23) oder der Zapfen (33, 37, 40) hineinragt.

10. Bürstenteil nach einem der vorhergehenden Ansprüche, **dadurch gekennzeichnet**, daß die Welle (7) in eine kontinuierliche oder oszillierende Rotation versetzbar ist.

11. Bürstenteil nach einem der vorhergehenden Ansprüche, **dadurch gekennzeichnet**, daß Mittel (17 bis 24, 33, 37, 38, 40, 41) vorgesehen sind, die eine zusätzliche Schwenkbewegung (27) des Borstenträgers (11) um eine Achse (28) bewirken, die einen Winkel von etwa 90 Grad zu der durch die Querachse (14) und Längsachse (3) bestimmten Ebene auf weist.

12. Elektrische Zahnbürste mit einem ankuppelbaren, insbesondere aufsteckbaren Bürstenteil (1, 30, 34, 39) nach einem der vorhergehenden Ansprüche.

## Claims

1. A brush section (1, 30, 34, 39) for an electric toothbrush, with a mounting tube (2) in which a shaft (7) rotatably mounted and drivable about a longitudinal axis (3) is received, and with a bristle carrier (11) coupled to the shaft (7) such that a rotary motion (25) of the shaft (7) about the longitudinal axis (3) effects an oscillatory rotational motion (26) of the bristle carrier (11) about a transverse axis (14), **characterized in that** the bristle carrier (11) is mounted directly on the shaft (7) and is guided on the mounting tube (2), and that the shaft (7) is configured as a crankshaft.

2. The brush section as claimed in claim 1, **characterized in that** the one end (18) of the shaft (7) forms the longitudinal axis (3), while the other end (19) of the shaft (7) is arranged at an angle (20, 32, 36) to said longitudinal axis (3).

3. The brush section as claimed in claim 2, **characterized in that** the angle (20, 32, 36) has a value in a range from nearly 0 to about 30 degrees, preferably about ten degrees.

4. The brush section as claimed in claim 2 or 3, **characterized in that** the bristle carrier (11) is pivotally mounted on the other, angled end (19) of the shaft (7).

5. The brush section as claimed in any one of the preceding claims, **characterized in that** the longitudinal axis (3), the transverse axis (14), the angled end (19) of the shaft (7) and an axis (28) transverse to the plane determined by the longitudinal axis (3) and the transverse axis (14) pass through a common point of intersection (29).

6. The brush section as claimed in any one of the claims 1 to 4, **characterized in that** the longitudinal axis (3), the angled end (19) of the shaft (7) and the axis (28) pass through a common point of intersection (31, 35) through which the transverse axis (14) does not pass.

7. The brush section as claimed in any one of the preceding claims, **characterized in that** the bristle carrier (11) is locked against axial displacement.

8. The brush section as claimed in any one of the preceding claims, **characterized in that** a pin (23) or a trunnion (33, 37) projects from the bristle carrier (11) in the direction of the transverse axis (14) and is coupled to a guiding means (24, 38) connected with the mounting tube (2).

9. The brush section as claimed in claim 8, **characterized in that** the guiding means is a slot (24, 38) or an opening (41) which is provided in a cap structure (10) affixed to the mounting tube (2) or in the mounting tube (2) itself and extends approximately parallel to the longitudinal axis (3), with the pin (23) or the trunnion (33, 37, 40) engaging within said slot or opening.

10. The brush section as claimed in any one of the preceding claims, **characterized in that** the shaft (7) is adapted to be set in a continuous or an oscillatory rotational motion.

11. The brush section as claimed in any one of the preceding claims, **characterized in that** means (17 to 24, 33, 37, 38, 40, 41) are provided which effect an additional pivotal motion (27) of the bristle carrier (11) about an axis (28) extending at an angle of 90 degrees, approximately, to the plane determined by the transverse axis (14) and the longitudinal axis (3).

12. An electric toothbrush having a brush section (1, 30, 34, 39) adapted to be coupled, in particular push-fitted thereto, as claimed in any one of the preceding claims.

## Revendications

1. Elément de brosse (1, 30, 34, 39) pour une brosse à dents électrique, comportant un tube de support (2) dans lequel est installé un arbre (7) apte à être entraîné et monté de manière à pouvoir tourner autour d'un axe longitudinal (3), et comportant un support de brosses (11) qui est accouplé à l'arbre (7), de sorte qu'un déplacement rotatif (25) de l'arbre (7) autour de l'axe longitudinal (3) a pour effet un déplacement rotatif oscillant (26) du support de brosses (11) autour d'un axe transversal (14), caractérisé en ce que le support de brosses (11) est monté directement sur l'arbre (7) et est guidé sur le tube de support (2), et l'arbre (7) est configuré comme arbre de manivelle.

2. Elément de brosse selon la revendication 1, caractérisé en ce qu'une extrémité (18) de l'arbre (7) forme l'axe longitudinal (3), et l'autre extrémité (19) de l'arbre (7) est disposé à un angle (20, 32, 36) par rapport à l'axe longitudinal (3).

3. Elément de brosse selon la revendication 2, caractérisé en ce que l'angle (20, 32, 36) présente une valeur comprise dans une plage allant de pratiquement 0 degré à environ 30 degrés, et vaut de préférence environ 10 degrés.

4. Elément de brosse selon la revendication 2 ou 3, caractérisé en ce que le support de brosses (11) est monté sur l'autre extrémité, coudée, (19) de l'arbre (7), de manière à pouvoir pivoter.

5. Elément de brosse selon l'une des revendications précédentes, caractérisé en ce que l'axe longitudinal (3), l'axe transversal (14), l'extrémité coudée (19) de l'arbre (7) et un axe (28) transversal par rapport au plan défini par l'axe longitudinal (3) et l'axe transversal (14) passent par un point d'intersection (29) commun.

6. Elément de brosse selon l'une des revendications 1 à 4, caractérisé en ce que l'axe longitudinal (3), l'extrémité coudée (19) de l'arbre (7) et l'axe (28) passent par un point d'intersection commun (31, 35) par lequel l'axe transversal (14) ne passe pas.

7. Elément de brosse selon l'une des revendications précédentes, caractérisé en ce que le support de brosses (11) est empêché de se déplacer dans le sens axial.

8. Elément de brosse selon l'une des revendications précédentes, caractérisé en ce qu'une tige (23) ou un tourillon (33, 37) déborde du support de brosses (11) dans la direction de l'axe transversal (14), et est accouplé à un guide (24, 38) relié au tube de support (2).

9. Elément de brosse selon la revendication 8, caractérisé en ce que comme guide, il est prévu une fente (24, 28) ou une ouverture (41) qui sont disposés dans une coquille (10) sensiblement parallèle à l'axe longitudinal (3) installée sur le tube de support (2) ou dans le tube de support (2) proprement dit, et dans laquelle pénètrent la tige (23) ou le tourillon (33, 37, 40).

10. Elément de brosse selon l'une des revendications précédentes, caractérisé en ce que l'arbre (7) peut être mis en rotation continue ou oscillante.

11. Elément de brosse selon l'une des revendications précédentes, caractérisé en ce que sont prévus des moyens (17 à 24, 33, 37, 38, 40, 41) qui ont pour effet un déplacement supplémentaire de pivotement (27) du support de brosses (11) autour d'un axe (28) qui forme un angle d'environ 90 degrés par rapport au plan défini par l'axe transversal (14) et l'axe longitudinal (3).

12. Brosse à dents électrique présentant un élément de brosse (1, 30, 34, 39) apte à être accouplé, et en particulier enfiché, selon l'une des revendications précédentes.
